# EUROPEAN PATENT APPLICATION

(11) **EP 4 840 805 A1**
(43) Date of publication of application: **18.11.2026**
(21) Application number: 26178783.2
(22) Date of filing: 14.05.2026
(51) Int. Cl.: B65H 20/34, B65H 18/02, B65H 19/22

(54) **APPARATUS AND METHOD FOR CONSTRUCTING A COIL, PREFERABLY FOR AN ELECTROCHEMICAL CELL INTENDED FOR THE PRODUCTION OF BATTERIES**

(30) Priority: 15.05.2025 IT 202500011000
(71) Applicant: G.D S.p.A., 40133 Bologna (BO) (IT)
(72) Inventor: BIONDI, Andrea, 40133 BOLOGNA (BO) (IT); CAVAZZA, Luca, 40133 BOLOGNA (BO) (IT); CAMPAGNOLI, Enrico, 40133 BOLOGNA (BO) (IT)
(74) Representative: Cavallin, Tommaso

(57) **Abstract**

An apparatus (100) for constructing a coil (B), comprising a supply unit (2) for supplying at least one web (N1), at least one compensator (1a) configured to contain a quantity of said at least one web (N1) which is variable in terms of length and comprising a fixed outlet section (4) for said at least one web (N1) a movable portion (50), positioned downstream of said at least one compensator (1a), configured to move reversibly along a movement direction (d) and comprising an inlet section (4') for said at least one web (N1), a winding unit (9) which for winding said at least one web (N1) housed on said movable portion (50) for constructing said coil (B), wherein there are not present between said fixed outlet section (4) and said inlet section (4') any adjustment systems for said at least one web (N1) or there are present only return systems for said at least one web (N1).

## Description

The present invention relates to an apparatus for constructing a coil, for example of the type formed by winding a web-like article that includes a web or a plurality of overlapping webs.

The invention also concerns a method for constructing the coil itself.

The present invention finds a preferred, although not exclusive, application in the field of the production of electrochemical cells, for the construction of which a winding of a web-like article is used.

In particular, in the pertinent technical sector, it is known to combine conductor webs and separator webs in layers in order to form an anode and cathode structure. The article made by overlapping the aforementioned layers is then wound into a coil and is used to construct the electrochemical cell itself.

In the present disclosure as well as in the herein enclosed claims, certain terms and expressions are deemed to have, unless otherwise expressly indicated, the meaning expressed in the following definitions.

The term "web-like article" is intended to mean any solid product which, within an industrial production line, is presented in the form of an elongated web or strip, i.e. an element in which the longitudinal extension is significantly greater than its transverse extension. The web-like article can be formed by a single web or strip of material, or by overlapping several webs arranged in layers.

The web-like article also has characteristics that allow a certain bending during its advancement along a relative production line.

The web-like article can for example be made by overlapping conducting and insulating layers alternated with each other and be intended to form a sandwich to be wound for making a coil intended for the production of electrochemical cells.

The term "winding" is intended to mean making a spiral structure by rotation of a web, a strip or more generally a web-like article around an axis, a flat surface or another structure. By winding, the web-like article will form one or more turns around the axis or the structure.

The term "coil" is intended to mean any spiral structure formed by winding a web, strip or more generally a web-like article around an axis, a flat surface or another winding structure. Depending on the structure around which the web-like article is wound, the overall shape of the coil may be substantially cylindrical rather than squashed or shaped otherwise.

As mentioned above, the coil can find application not only in the electrochemical cell sector but also in other sectors, such as for example in the conductor sector, within which coil-shaped structures can likewise be used.

The term "closed path" is intended to mean a path along which a winding head or other element travels in which the starting point and the end point of the path substantially coincide.

The term "continuous" refers to an expression of motion, which means an operation that takes place without interruption, without there being a stop or an interruption in the operation in question. In particular, with reference to the movement of a web or another element, the term "continuous" indicates that the web is never stopped during its movement.

The term "substantially constant" referring to a measurement or amount, such as for example the speed of displacement of an object, means that such measurement or amount maintains, over time, a value which preferably varies by a maximum of ±10%, preferably by a maximum of ±5%, preferably by a maximum of ±2%.

The term "integral" referring to the movement of two or more elements means that these elements perform substantially the same movement and substantially simultaneously. In other words, two integral elements move together, as a single body, although they are not necessarily joined or constrained to each other. It can in fact be provided that the respective systems of movement of the two elements are coordinated in such a way as to move, when necessary, the two elements together. Furthermore, it may be provided for the use of a temporary constraint between the two elements which, for example, joins them to each other in some steps, causing them to move together, and separates them again, making them movable independently of each other.

It should also be noted that the expression "to move an object between a first position and a second position" means both the movement from the first position to the second position and the movement from the second position to the first position.

This definition applies in an analogous way to similar expressions of motion, such as for example to transfer or to move a generic object between two positions or between two zones or even between two different operating configurations.

In this context, the term "kinematically independent" refers to two or more systems that are able to perform movements completely independently and separately. In other words, kinematically independent systems or devices are configured in such a way that they can carry out their intended movements without changing the position of other affected systems. It is also significant to realise that this condition of kinematic independence does not prohibit different systems or devices from collaborating and/or transferring material to each other along common and substantially overlapping stretches of space.

It is further important to note that this condition of kinematic independence does not exclude the possibility of different and directly independent parts having a common driving origin. In this sense, kinematically independent systems could be moved, for example, by the same drive shaft via different types of drive links, while still performing their own motions that do not directly influence each other.

The term "pin" will be used hereafter to refer to a mechanical connecting element, with an elongated extension or otherwise configured in such a way as to define a respective axis about which it can rotate. In the context of the present invention, such an element may have a cross-section of any shape, for example semicircular, circular, triangular, or even such that the overall shape of the pin is flat.

In this context, the term "predefined advancement path" for a web is used to identify the predetermined trajectory that the web follows in space when it is moved from the supply systems to the winding or coupling unit.

In this context, the term "active adjustment systems" identifies systems that perform operations that vary longitudinal characteristics of the web such as, for example, length, by means of a cutting operation, tension, by means of tensioning devices, web advancement speed or the amount of web unwound, by means of pulling devices, or similar technical solutions.

In this context, the term "passive control systems" identifies systems that are not active control systems and can, by way of example, perform operations such as transverse web alignment, e.g. by means of devices consisting of two or more alignment rollers, or positioning operations, e.g. by means of deflection rollers, or folding operations, e.g. by means of suitably shaped surfaces.

In this context, the term "adjustment systems" is used to identify both active and passive adjustment systems.

In this context, the term "deflection systems" identifies devices or elements whose function is to define the predefined advancement path of the web without introducing further variations on longitudinal or transverse characteristics of the web.

By way of non-limiting example, an example of a deflection system could be a deflection roller, or an abutment surface that merely slides the web along the predefined advancement path.

In this context, the term "supply unit" refers to the coil loading unit, i.e. the device that supports and supplies the coil, and not to any additional unwinders that may be located elsewhere in the web advancement path.

In this context, the term "outlet section" referring to a compensator means the passage section of the web at the last point of contact between the web and the last element of the compensating device that contacts the web in the advancement direction of the web itself, such as, for example, the last point of contact between the web and the last roller or pair of rollers or side that contacts the web as it exits the compensator device.

Similarly, in this context the "inlet section" referring to a movable portion means the passage section of web at the first point of contact between the web and the first element of the movable portion contacting the web in the advancement direction of the web itself, such as, for example, the first roller or pair of rollers or side that contacts the web at the inlet to the movable portion.

The term "longitudinal direction" referring to a web means the extension direction of the web. In other words, it means the direction in which its entire length extends.

The term "transverse direction" referring to a web means the direction perpendicular to the longitudinal direction of the web, lying on the plane comprising the surface of the web: in other words, it means the direction in which the width of the web extends.

The term "mean plane" of the web means the plane of symmetry of the web, parallel to the longitudinal direction and passing through the centre of the web measured along its transverse direction.

In this context "minimum distance" referring to the distance between the fixed outlet section of a compensator and the inlet section of the movable portion, means the scalar value of the minimum distance between the sections, measured at the last point of contact between the web and the last element of the compensator contacting the web and the first point of contact between the web and the first element of the movable portion contacting the web: these contact points are determined respectively from the point of intersection between the fixed outlet section of the compensator and the mean plane of the web and from the point of intersection between the inlet section of the movable portion and the mean plane of the web.

Similarly, in this context, when the term "distance" refers to the fixed outlet section of a compensator and the inlet section of the movable portion, this scalar quantity is consistently identified between the last element of the compensator contacting the web and the first element of the movable portion contacting the web along the working path. Since the movable portion is configured to move reversibly along its own movement direction, the value of the above-mentioned distance between the fixed outlet section from the compensator the inlet section of the movable portion may vary during the processing steps envisaged within an operating process, while the minimum distance is not varied during operating steps. inlet section

The Applicant, in the context of the constant need to increase the performance and the efficiency of the production processes, has preliminarily observed how, in a production line for making a coil, the feed rate of the web-like article with respect to the unit that carries out the winding thereof can be an important element limiting the production capacity of the line itself.

Furthermore, this limitation is even more critical if high precision is required in the formation of the coil. In particular, the Applicant has noted that in many applications, such as for example in the production of electrochemical cells, high precision in the geometry of the windings must be ensured in order to ensure the required performance of the finished product.

The Applicant noted that it is possible to increase the winding speed of the web-like article with respect to known solutions if the movement of the web is not interrupted during the different construction steps of the coil.

The Applicant therefore noted that it is possible to increase the production efficiency of electrochemical batteries by winding webs with respect to known solutions if such operations are carried out continuously in accordance with movements of specific movable parts configured in such a way as to advantageously alter the extension of the predetermined path of at least one web of the web-like article.

Further, through specific studies and investigations, the Applicant noted that certain variations in the web path for the purpose of a continuous process could produce undesirable tensions on the web itself, deteriorating the final product.

In particular, the Applicant noted that the winding unit causes motion characterised by variations in speed and/or acceleration and that these variations can have a direct effect on the tension of the web, potentially also altering the precision of the correct positioning of the web. The Applicant therefore found that it was further advantageous to be able to optimise this process on a continuous basis by trying to minimise the extent of the section of web subjected to possible variations in motion related to the winding unit.

Therefore, in a first aspect thereof, the present invention concerns an apparatus for constructing a coil.

Preferably, the coil is suitable for an electrochemical cell intended for battery production.

Preferably, said apparatus comprises a supply unit for supplying at least one web, suitable for constructing a web-like article for said coil, along a predefined advancement path.

Preferably, said apparatus comprises at least one compensator for said at least one web downstream of said supply unit.

Preferably, said at least one compensator is configured to contain a variable amount of said at least one web in terms of length along said advancement path.

Preferably, said at least one compensator comprises a fixed output section for said at least one web.

Preferably, said apparatus comprises a movable portion placed downstream of said at least one compensator.

Preferably, said movable portion is configured to move reversibly along a displacement direction between a first position distal to said supply unit and a second configuration proximal to said supply unit.

Preferably, said movable portion comprises an input section for said at least one web.

Preferably, said apparatus comprises a winding unit housed on said movable portion.

Preferably, said winding unit comprises at least one winding head configured to wind said at least one web to construct said coil.

Preferably, there are not present between said fixed outlet section of said at least one compensator and said inlet section of said movable portion any adjustment systems for said at least one web.

Alternatively, there are not present between said fixed outlet section of said at least one compensator and said inlet section of said movable portion any elements contacting the web.

Alternatively, between said fixed outlet section of said at least one compensator and said inlet section of said movable portion there are present only deflection systems.

With each of these technical solutions, it is possible to increase the yield of the coil construction process by avoiding stresses induced by active or passive adjustment systems that would produce undesirable stresses on the web itself during operation due to unwanted inertias transmitted to the moving web. Additionally, the fact that the compensator comprises a fixed output section enables the aforementioned undesirable stresses applied to the web to be managed and contained in an even more advantageous manner, thus performing an optimised adaptation function through movement thanks to the movable portion. In this sense, therefore, a fixed output portion of the compensator placed upstream of the movable portion facilitates the control of any deformations induced on the web during the intended process steps.

For the sake of further clarity of exposition, it is noted that the expression "there are not present between said fixed outlet section of said at least one compensator and said inlet section of said movable portion any adjustment systems for said at least one web" indicates a configuration whereby the fixed output section of said at least one compensator and the input section of said movable portion are directly facing each other so that no interacting element is interposed between them and in particular placed in contact with the web.

According to a second aspect, the present invention concerns an apparatus for constructing a coil.

Preferably, the coil is suitable for an electrochemical cell intended for battery production.

Preferably, said apparatus comprises a supply unit for supplying at least one web, suitable for constructing a web-like article for said coil, along a predefined advancement path.

Preferably, said apparatus comprises at least one compensator for said at least one web downstream of said supply unit.

Preferably, said at least one compensator is configured to contain a variable amount of said at least one web in terms of length along said advancement path.

Preferably, said at least one compensator comprises a fixed output section for said at least one web.

Preferably, said apparatus comprises a movable portion placed downstream of said at least one compensator.

Preferably, said movable portion is configured to move reversibly along a movement direction between a first position distal to said supply unit and a second position proximal to said supply unit.

Preferably, said apparatus comprises a winding unit housed on said movable portion.

Preferably, said winding unit comprises at least one winding head configured to wind said at least one web to construct said coil.

Preferably, said at least one compensator is positioned immediately upstream of said movable portion. Preferably, said at least one compensator is positioned so that between said outlet portion of said at least one compensator and said movable portion there is a minimum distance smaller than 500 mm.

According to an embodiment this minimum distance is, for example, comprised between 50 mm and 500 mm, or for example between 50 mm and 300 mm, or for example between 50 mm and 200 mm.

As previously described, this minimum distance can advantageously be identified as the distance between the fixed output section of the compensator and the input section of the movable portion.

Preferably, said lower minimum distance of 500 mm is identified when said movable portion is in said second proximal position.

Thanks to this technical solution, it is possible to solve the same technical problem addressed by the first aspect of the present invention, as it is also possible to increase the yield of the coil-construction process by reducing any stresses induced on excessive lengths of the web subjected to possible stresses applied by the operating mechanical parts.

According to a third aspect thereof, the present invention concerns a method for constructing a coil.

Preferably, said method comprises supplying by means of a supply unit at least one web along a predefined advancement path at a first linear velocity.

Preferably, said method comprises providing a compensator for said at least one web along said predefined advancement path.

Preferably, said method comprises providing downstream of said compensator a movable portion, configured to move along a movement direction between a first distal position with respect to said supply unit, in which a maximum length of said at least one web is interposed between said movable portion and said compensator, and a second proximal position with respect to said supply unit, in which a minimum length of said at least one web is interposed between said movable portion and said compensator.

Preferably, said method comprises the provision of a winding unit, housed on said movable portion, comprising at least one winding head.

Preferably, said at least one winding head is configured to wind said at least one web to construct said coil.

Preferably, said method comprises at least partially winding said at least one web by means of said winding head at a first linear winding velocity greater than said first linear velocity, thereby bringing about a first linear velocity difference between said first linear winding velocity and said first linear velocity.

Preferably, at least partially winding said at least one web by said winding head takes place while said movable portion is in motion.

Preferably, said method comprises compensating for a quantity of said at least one web required by said winding head as a function of said first linear velocity difference by moving said movable portion from said distal position towards said proximal position and activating said compensator.

Thanks to this technical solution, it is possible to optimise the advancement and winding of the web by selectively managing and dosing the portion of compensation produced by moving the movable portion and the compensator.

The present invention, in at least one of the aforementioned aspects, may have at least one of the further preferred features listed below.

Preferably, said at least one compensator is positioned immediately upstream of said movable portion.

Preferably, said at least one compensator is positioned immediately upstream of said movable portion so that between said fixed outlet section of said at least one compensator and said inlet section of said movable portion there is a minimum distance smaller than 500 mm when said movable portion is in said second proximal position.

In this way, the damage suffered by the web during the various movements can be reduced as the extension of the web comprised between the compensator and the movable portion is sufficiently contained.

Preferably, said at least one web corresponds to four webs, two of which are separators and two conductors, and each of said four webs is compensated by a respective compensator.

This technical solution makes the coil-construction process even more efficient, as four different offsets specifically determined for the requirements of each web can be implemented.

Preferably, said at least one compensator comprises a plurality of movable rollers configured to move with respect to one another so as to contain said quantity of said at least one web which is variable in terms of length along said advancement path.

Preferably, said at least one compensator comprises a fixed outlet section of said at least one compensator comprising a first fixed redirecting outlet roller.

This allows any web direction changes to be managed without introducing further deformation or damage to the web itself.

Preferably, said at least one compensator comprises a plurality of movable rollers configured to move with respect to each other so as to contain said quantity of said at least one web which is variable in terms of length along said advancement direction, and said fixed outlet section of said at least one compensator comprises a first fixed redirecting outlet roller.

This technical solution makes it possible to create an efficient compensator, easily adaptable to different needs or changes in coil format to be carried out at an industrially advantageous cost.

Preferably, the movable rollers included in said compensator are idle.

In this way, any deformations introduced by such idler rollers on at least one web are further reduced if not completely avoided.

According to a further embodiment, said compensator is a pneumatic loop.

This additional embodiment makes it possible to avoid or limit unwanted deformations on the at least one web.

Preferably, the pneumatic loop comprises a predefined U-shaped or curved advancement path section and a movable element configured to determine a change in web length at the pneumatic loop.

Preferably, for any position of said movable portion along said movement direction, the distance between said at least one compensator and said movable portion is comprised between 50 mm and 2000 mm. For example, the distance between said at least one compensator and said movable portion is comprised between 50 mm and 1200 mm, or e.g. 50 mm and 1000 mm.

As previously described, this distance between said at least one compensator and said movable portion can advantageously be identified as the distance between the fixed output section of the compensator and the referred input section of the movable portion.

In this way, damage that may be induced in the at least one web can be controlled and limited.

Preferably, said at least one compensator extends according to a prevailing direction that is substantially horizontal.

Thanks to this technical solution, it is possible to provide a configuration of the equipment that optimises the footprint and is thus more compact and efficient.

According to a further embodiment, said at least one compensator extends in a prevailing direction that is substantially vertical.

In this way, any undesirable sticking, bending, warping or oscillating of the web can be avoided or reduced, as gravity tends to reduce them spontaneously.

Preferably, said compensation is implemented by moving said movable portion by 100% of the difference between said maximum length and said minimum length.

This technical solution effectively achieves the desired compensation of the web that has to be wound for constructing the coil.

According to a further embodiment, said compensation is carried out by moving said movable portion between 99% and 1% of the difference between said maximum length and said minimum length and the remaining compensation necessary is carried out by means of said compensator.

In this way, two different types of compensation can be realised simultaneously, further reducing coil winding times and ensuring improved process control.

Preferably, the four webs have different total lengths when wound onto the coil and said four compensators are configured to compensate for a difference in length between said webs of less than or equal to 15% of the total length of the longest web.

Thanks to this technical solution, it is possible to manage the different lengths of the different webs that are wound to construct the desired coil.

The characteristics and advantages of the invention will become clearer from the detailed description of a preferred embodiment thereof, shown by way of non-limiting example, with reference to the accompanying drawings wherein:
- Figure 1a is a schematic, front view of the apparatus according to an aspect of the present invention;
- Figure 1b is a front view of a detail of Figure 1a;
- Figure 1c is a front perspective view from below of Figure 1a;
- Figure 1d is a schematic, front view of the apparatus according to the present invention in a different configuration (missing figure to be provided);
- Figure 2a is a schematic, front view of the apparatus according to a further aspect of the present invention;
- Figure 2b is a front view of a detail of Figure 2a;
- Figure 3a is a schematic, front view of the apparatus according to a further configuration of the present invention;
- Figure 3b is a front view of a detail of Figure 3a.

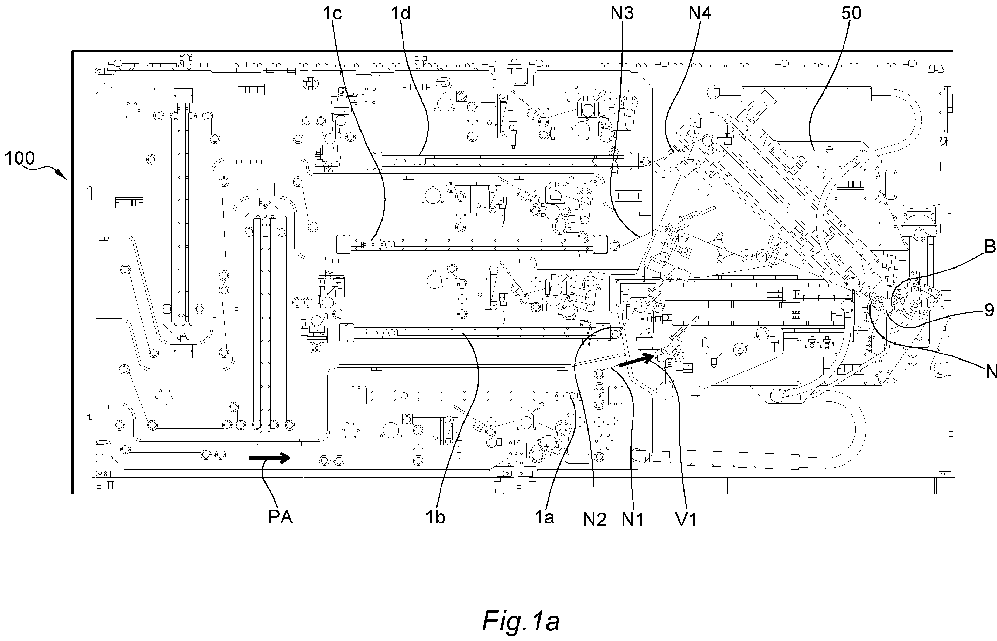

With reference initially to Figure 1a, an apparatus for constructing a coil B in accordance with the present invention is indicated as a whole with 100.

In preferred embodiments, the apparatus 100 is intended to carry out the winding of a web-like article N intended for the production of electrochemical cells.

It is however understood that this represents a possible embodiment example and that the apparatus 100 according to the present invention may be intended for winding web-like articles also intended for different uses, even in fields other than those relating to the production of electrochemical cells.

For example, still in the field of energy storage, the present invention can find application in the production of other rolled components intended for batteries or supercapacitors.

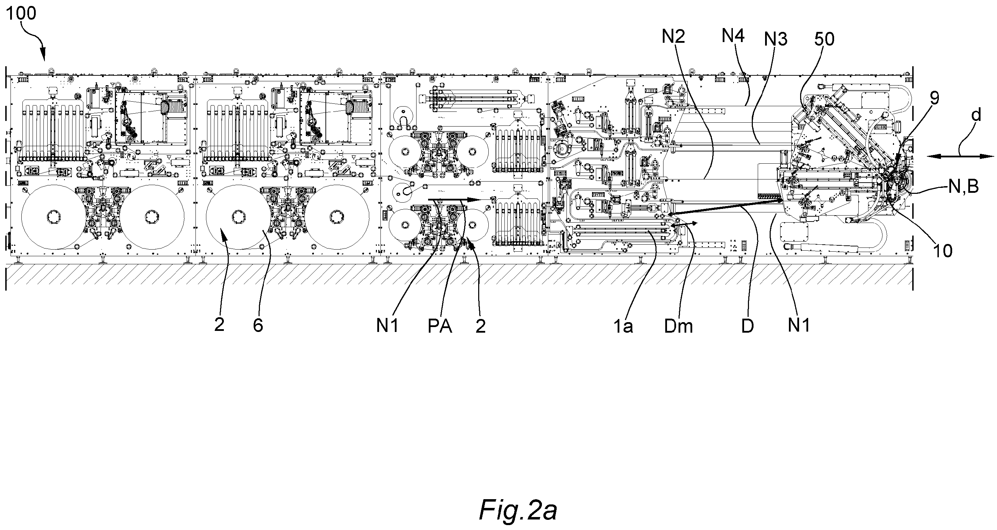

In some embodiments, such as for example the one illustrated in Figure 1a or 2a, the apparatus 100 may be used within a line for the production of coil for electrochemical cells, in which the web-like article N is made by a combination of multiple webs N1, N2, N3, N4, preferably overlapped into layers.

Such webs preferably comprise at least two conductor webs N1, N3 and two separator layers N2, N4, which are arranged alternated to form the web-like article N.

In this way the separator webs N2, N4 can allow to keep the two conductor webs N1 and N3 electrically separated from each other as they are spirally wound, forming the coil intended for the electrochemical cell.

In the preferred embodiments shown for example in Figure 2a, the webs N1, N2, N3, N4 are supplied by supply devices 6 comprised in supply units 2. By way of example, Figure 2a illustrates an embodiment example of the delivery devices 6 of the separator and conductor webs, which can be formed by large-sized coils in which the web is collected so as to be unwound and therefore provided during operation of the apparatus.

The webs N1, N2, N3, N4 supplied by the supply devices 6 are supplied along a respective predefined advancement path PA.

In more detail and again with reference to Figure 1a, it can be seen that the first web N1 is supplied along said predefined advancement path PA at a first linear velocity V1.

The apparatus 100 is configured to combine the webs N1, N2, N3, N4 with each other to form the web-like article N before or during a winding produced by a winding unit 9, the characteristics of which will be described in detail below.

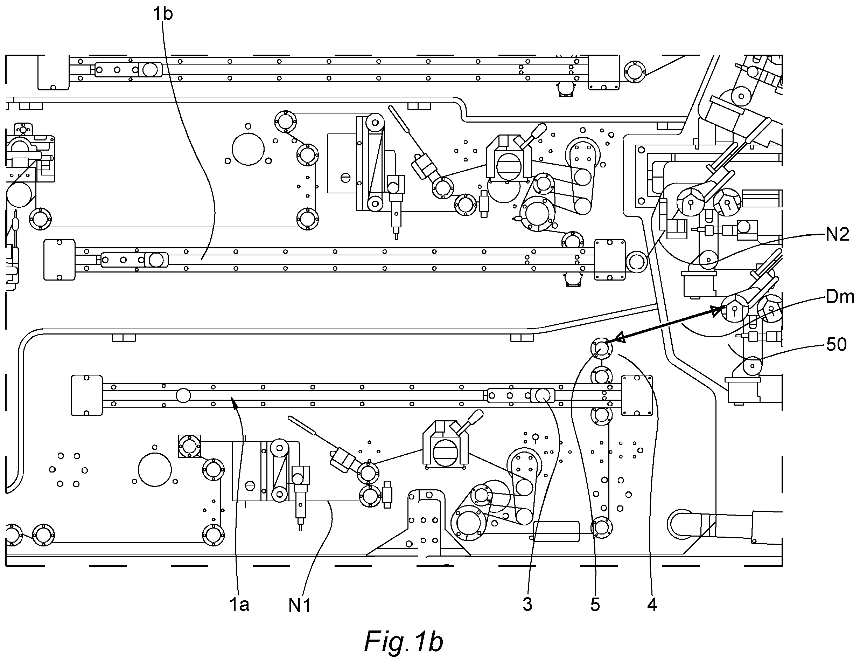

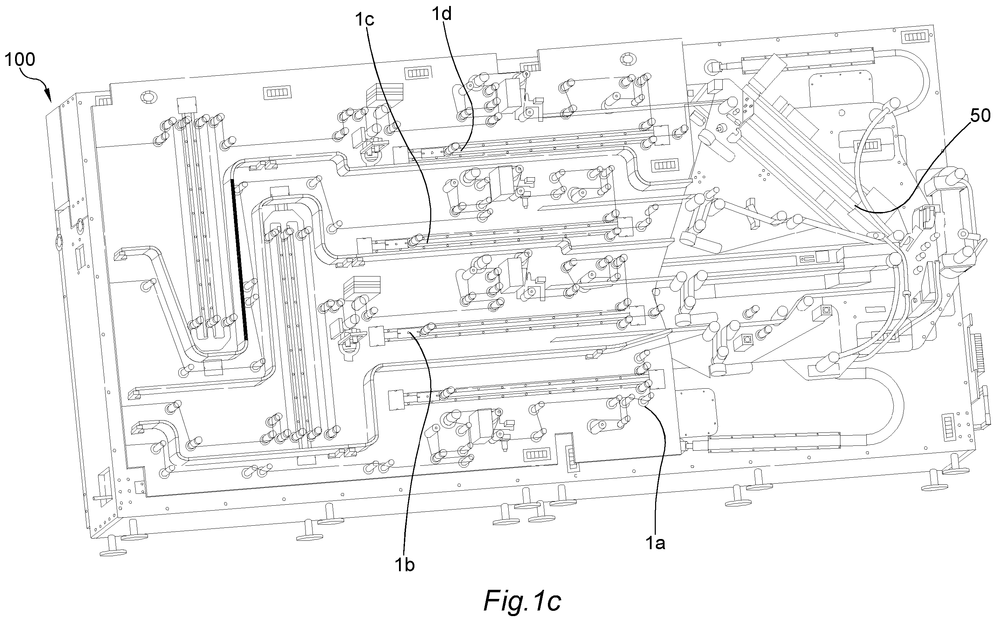

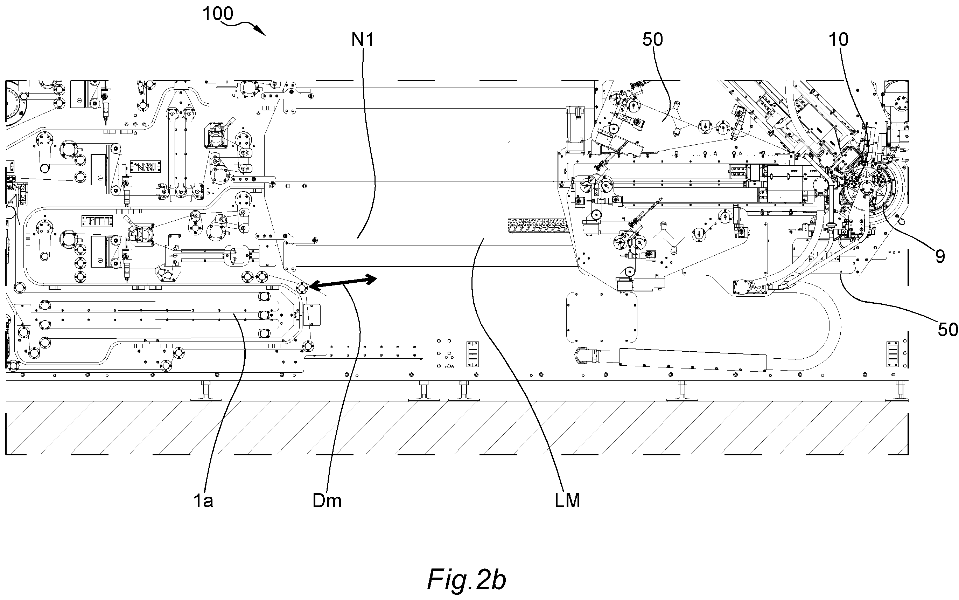

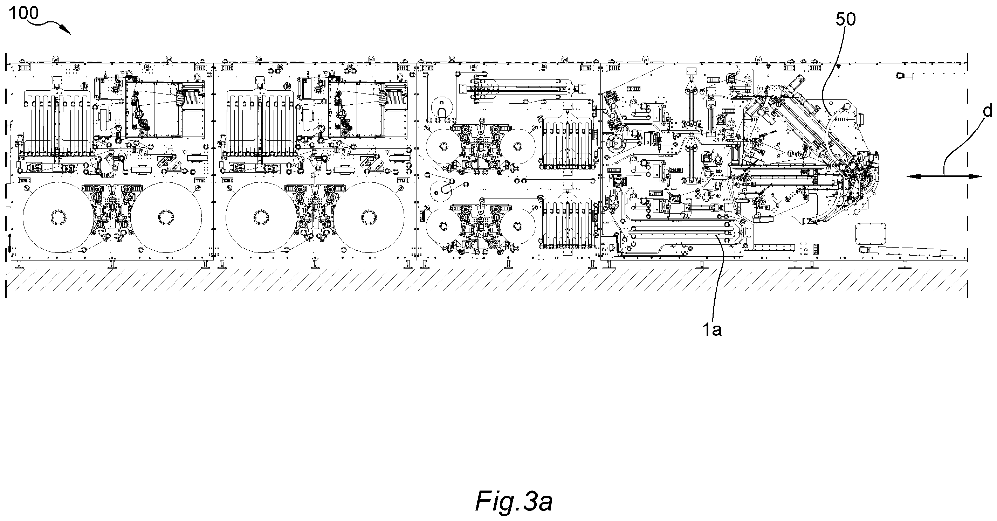

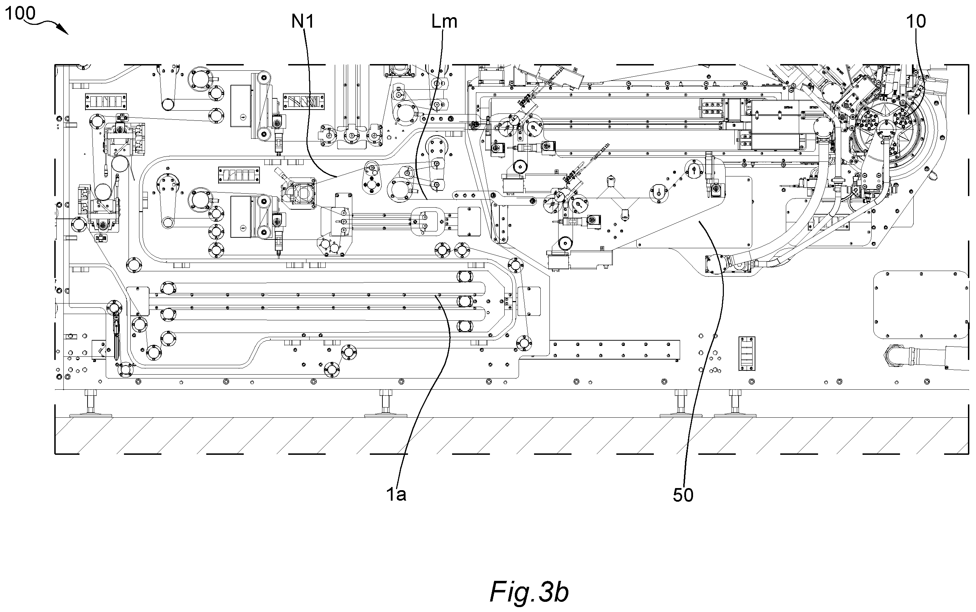

Preferably, the apparatus 100 comprises a movable portion 50, configured to move along a movement direction d between a first position proximal to the supply unit 2 (shown for example in Figures 1a, 1b, 1c, 3a and 3b) and a second position distal to the supply unit 2 (shown for example in Figures 2a and 2b).

As can be seen from Figures 1a and 2a, the winding unit 9 is advantageously mounted on the movable portion 50.

In more detail, the winding unit 9 comprises at least one winding head 10 configured to wind the four webs N1, N2, N3, N4 so as to construct the coil B.

As can be seen from Figure 1b, the four webs N1, N2, N3, N4, once they have entered the movable portion, are made to converge by reducing the relative distances up to the winding head 10 constructing the web-like article N while winding it in the form of a coil B.

The apparatus 100 comprises at least one compensator 1a positioned along the predefined advancement path PA. In more detail and as shown in Figure 1c, the apparatus 100 comprises four compensators 1a, 1b, 1c, 1d each operating on a respective web of the four webs N1, N2, N3, N4.

It will be appreciated that the webs, before being provided to the one or more compensator(s) 1a, can pass through further units for example intended to carry out preliminary processing on the webs. For example, the conductor webs N1, N3 may be subjected to preliminary ablation operations to form a relative outer edge in order to facilitate the connections with the further conductor portions within the electrochemical cell.

For example, in the construction of coils intended for use in electrochemical cells, it may be contemplated that the webs forming the anode and cathode N1, N3, respectively, are not present in the end portion of the web-like article N wound to form the coil B. In other words, it may be contemplated that the coil has a terminal and/or initial flap in which only the two separating webs N2, N4 are present superimposed.

The four compensators 1a, 1b, 1c, 1d are configured to contain a desired amount of each of the respective four webs N1, N2, N3, N4 that is variable in length along the advancement path PA.

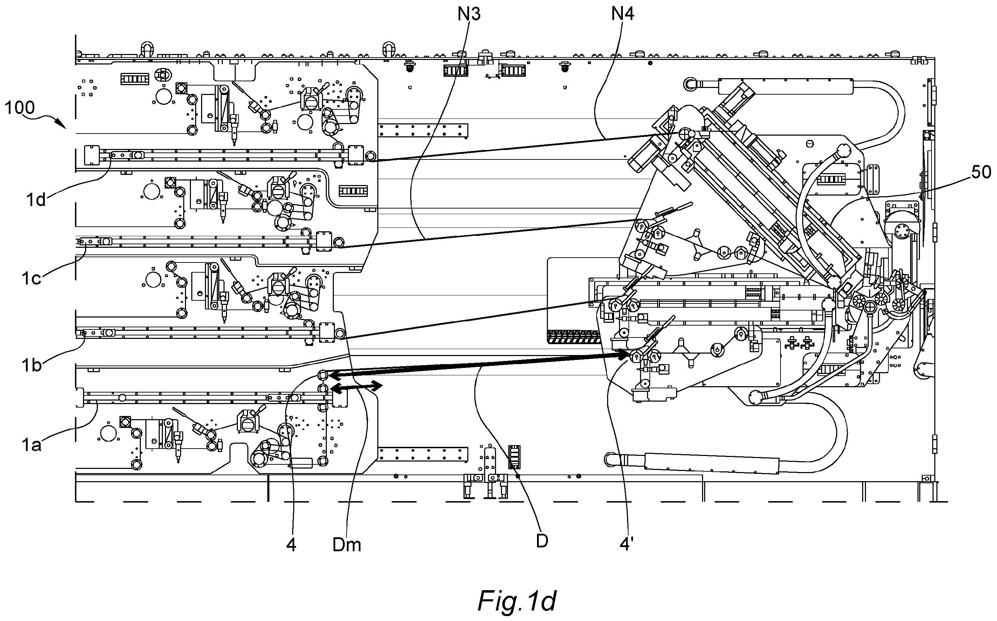

It can be seen, as shown for example in the embodiment shown in Figures 1a, 1b, 1c and 1d, that each compensator 1a, 1b, 1c, 1d is positioned immediately upstream of the movable portion 50 and that between it and the movable portion 50 there are only any passive adjustment systems for the respective web N1, N2, N3, N4.

As previously described, "passive control systems" are systems that do not perform operations that vary characteristics of the web such as, for example, length, by means of a cutting operation, tension, by means of tensioning devices, web advancement speed or the amount of web unwound, by means of pulling devices, or similar technical solutions.

Indeed, in the embodiment shown in Figures 1a, 1b and 1c, it can be seen that the webs N1, N2, N3, N4 exiting each compensator 1a, 1b, 1c, 1d enter directly into the movable portion 50 without undergoing any further active adjustments such as tension control, orientation adjustment, etc.

Equivalent technical solutions could be identified in apparatuses such as those just described in which, for example, between a compensator 1a and the movable portion 50 there is a redirecting roller, in particular idler.

As shown in detail in Figure 1b, the compensator 1a (and similarly the other three compensators 1b, 1c and 1d) comprises an inlet section for the web N1, a fixed outlet section 4 for the web N1 including a redirecting outlet roller 5 and a plurality of rollers 3 interposed according to the predefined advancement path PA between the inlet section and the fixed outlet section 4.

The plurality of rollers 3 comprises fixed rollers with respect to the predefined advancement path PA and at least one displaceable roller with respect to the predefined advancement path PA. Thanks to this technical solution, it is thus possible to quickly and efficiently accumulate a desired variable quantity of web between the plurality of rollers 3, which can be collected and released as required.

According to an embodiment not shown in the figures, these compensators 1a, 1b, 1c, 1d can be made as pneumatic loops.

Interestingly, the movable portion 50 according to the present invention also acts, at least partially, as a kind of compensator for the four webs N1, N2, N3, N4.

In fact, said movable portion 50 is positioned downstream of the compensator 1a, so that when it is in the first position distal to the supply unit 2 a maximum length LM of the web N1 is interposed between the movable portion 50 and the compensator 1a (shown for example in Figure 2b), whereas when the movable portion 50 is in the second position proximal to the supply unit 2, a minimum length Lm of the web N1 is interposed between the movable portion 50 and the compensator 1a (shown for example in Figure 3b).

It is thus immediately clear that as the movable portion 50 moves, for example, from the distal position, where there is the maximum length LM of the web N1, to the proximal position, where there is the minimum length Lm of the web N1, the amount of web N1 that can be wound by the winding head 10 potentially increases because the amount of web N1 supplied by the supply device 6 at the respective linear velocity V1 is added to the amount of web N1 that is recovered by the movable portion 50 as it approaches the compensator 1a.

Thanks to this technical solution, it is therefore possible to wind the web N1 at a first linear winding velocity VA1 that is greater than the respective first linear velocity V1 with which it is supplied.

This technical solution is clearly also applicable to the other three webs N2, N3, N4 depending on the respective compensators 1b, 1c, and 1d.

Consistently, it is also possible to realise "movable stops" by moving the movable portion 50 from the proximal to the distal position.

In fact, during this type of movement, if the movable portion 50 is moved, for example, with a speed substantially equal to the first linear velocity V1 then web N1 and movable portion 50 will be in a relative tracking configuration, thus resulting in a condition of relative zero velocity (i.e. equivalent to a stop).

Interestingly, during such movable stops, it will be possible to carry out operations that generally require the web advancement to be stopped (e.g. cutting or other processing) while actually maintaining a constant supply speed of the web itself.

Accordingly, in preferred embodiments, the action of one of the compensators 1a, 1b, 1c, 1d may be associated with a holding device of the respective web configured to guide, slow down or stop the feeding of one or more of the webs.

For example, in some embodiments the presence of a gripper, or other similar holding element, acting on the web at the time when it is required to be stopped or slowed down may be provided in order to slow down the movement of such a part of web.

Further holding forms of the webs such as the gripper can be advantageously movable and constrained to the movable portion 50, so that the advancement speed of the respective web can be regulated by controlling its movement.

The gripper can also be associated with a relative cutting device which, if necessary, cuts one of the webs, to create an interruption in the continuity of this web within the overall web-like article N.

In preferred embodiments, the further cutting device may comprise a knife or another device such as a laser ablation system.

Furthermore, according to what has been described above, the maximum length of the web reached at the distal position becomes recoverable by moving the movable portion 50 in the opposite direction so as to return to the proximal position.

It is further interesting to consider that the movable portion 50 can act as a kind of compensator that preferably produces the same length variation for all the webs N1, N2, N3, N4 at the same time, while the four compensators 1a, 1b, 1c and 1d are configured to independently produce an additional length variation of the respective webs.

Moreover, this level of adaptability of the present invention allows not only for differentiating lengths between the various webs, but also for potentially determining different moments
in which the lengths of individual webs are varied.

It can therefore be deduced that this innovative solution makes it possible to ideally manage the desired movable stop and winding acceleration steps by separating these corrections into contributions implemented uniformly and simultaneously on all four webs N1, N2, N3, N4 (via the movable portion 50) and/or making specific and individual length variations for each web and in a desired time interval (via the independent compensators 1a, 1b, 1c and 1d).

The four compensators 1a, 1b, 1c and 1d can be arranged either horizontally or vertically according to specific wishes or needs.

By way of example only, the four compensators 1a, 1b, 1c and 1d are shown in Figure 1a as arranged horizontally.

Similarly, the movable portion 50 can move between the distal and proximal position in vertical, horizontal directions or combinations thereof.

By way of non-limiting example, the movable portion 50 as depicted in Figures 2a and 3a moves according to translation and preferably along a substantially horizontal direction.

According to a further embodiment shown for example in Figure 1b or 3b, between the fixed output section of at least one compensator 1a and the movable portion 50 there is a minimum distance Dm of less than 500 mm. More preferably, the minimum distance Dm is identified between the fixed output section 4 of the at least one compensator 1a and an input section 4' of the movable portion 50.

By way of non-limiting example, the fixed outlet section may be identified at or near the axis of rotation of the last roller of the compensator while the inlet section 4' of the movable portion is identified with the axis of rotation of the first roller of the movable portion 50.

Further and as shown in Figures 1d and 2a, for any position of the movable portion 50 along the movement direction d, the distance D between at least one compensator 1a and the movable portion 50 is comprised between 50mm and 2000mm. For example, the distance between said at least one compensator and said movable portion is comprised between 50 mm and 1200 mm, or e.g. 50 mm and 1000 mm.

As described above, the distance D is preferably measured between the fixed output section of the at least one compensator 1a and the input section 4' of the movable portion 50.

Also, in this case, by way of non-limiting example, the fixed outlet section may be identified at or near the axis of rotation of the last roller of the compensator while the inlet section 4' of the movable portion is identified with the axis of rotation of the first roller of the movable portion 50.

According to this embodiment, it is possible, for example, to insert further devices (e.g. an unwinder and/or a tensioner) between one or more of the compensators 1a, 1b, 1c and 1d and the movable portion 50 while still producing the same or a similar technical effect as in the first described embodiments, since also in this case a reduction of the damage induced on the webs N1, N2, N3 and N4 is ensured.

During the production of the coil B, the webs N1, N2, N3, N4 are wound in layers on top of each other and potentially undergo several processing steps.

This means that the different webs N1, N2, N3, N4 can have a maximum length variation of up to 15% between them.

Thanks to the technical solutions pertaining to the present invention, however, it is possible to manage such dimensional differences effectively and advantageously.

In some embodiments of the present invention, an additional unwinder is provided upstream of the movable portion 50 and downstream of the compensator 1a. In this sense, it seems appropriate to clarify that the supply unit 2 means the actual coil loading unit, which supports and dispenses the coil (not any further unwinders which may also be inserted, in specific examples, downstream of the compensator 1a).

In order to produce a more complete and exhaustive description, the possible modes of operation of this invention are described in more detail below.

This method for constructing a coil comprises dispensing via the supply unit 2 the four webs N1, N2, N3, N4 along the predefined advancement path PA at respective first linear velocity V1, second linear velocity V2 (not shown in figures), third linear velocity V3 (not shown in figures), fourth linear velocity V4 (not shown in figures).

The method comprises providing four compensators 1a, 1b, 1c, 1d for each web along the respective predefined advancement path PA.

The method comprises arranging downstream of each compensator 1a, 1b, 1c, 1d a movable portion 50, configured to move, preferably according to translation, along a movement direction d between a first position distal to said supply unit 2, in which a relative maximum length LM of each web N1, N2, N3, N4 and a second position proximal to said supply unit 2 is interposed between the movable portion 50 and each compensator, in which a relative minimum length Lm of each web is interposed between the movable portion 50 and each compensator.

It is clear that for each web n1, N2, N3, N4 it will be possible to determine a relative and specific maximum length LM1, LM2, LM3, LM4 and minimum length Lm1, Lm2, Lm3, Lm4 (not shown in detail in the figures).

The method comprises arranging the winding unit 9, housed on the movable portion 50, comprising at least one winding head 10 configured to wind the four webs N1, N2, N3, N4 to construct the coil B.

The method comprises, at least in part, winding the four webs N1, N2, N3, N4 through the winding head 10 at a first linear winding velocity VA1 greater than, for example, the first linear advancement velocity V1 of the first web N1 while the movable portion 50 is in displacement thereby determining, for example, a first linear velocity difference ΔV1 between the first linear winding velocity VA1 of the winding head 10 and the first linear advancement velocity V1 of the first web N1.

The method comprises compensating for a quantity of, for example, the first web N1 required by the winding head 10 according to the first linear velocity difference ΔV1 by moving the movable portion 50 from the distal position to the proximal position and activating the corresponding compensator 1a.

Similarly, these operating modes can also be applied independently on the other three webs N2, N3 and N4 by advantageously adapting the relative web velocities and/or the movements of the specifically dedicated compensators 1b, 1c, 1d.

According to some preferred versions, the compensating operation is implemented by moving the movable portion 50 between 99% and 1% of the difference between the maximum length LM and the minimum length Lm, and the remaining necessary compensating is implemented via the respective compensator 1a (or 1b, 1c, 1d).

For example, it is possible for a web to be relatively slowed down and then accelerated in its winding step, and for this variation in available effective length to be managed by moving the movable portion 50 by 80% and the respective compensator by the remaining 20%.

As previously described, the winding of the web-like article N in the form of a coil B can be stopped and the apparatus 100 comprises cutting devices configured to separate two portions of the webs.

Preferably the winding unit comprises three winding heads 10 that can be moved with respect to each other.

Once the web-like article N has been cut, two flaps are defined, one associated with a first winding head that forms the terminal part of the coil B wound therein, and one associated with the second winding head that forms the initial part of the coil B that will be subsequently wound.

In some embodiments, the application of a closing element of the coil B can also be provided, which closing element is configured in such a way as to prevent it from unwinding once it is discharged from the winding head 10. Such a closing element may for example be represented by a web applied circumferentially to the coil in order to close the terminal flap of the web-like element.

Obviously, a person skilled in the art may, in order to meet specific and contingent application requirements, make further modifications and variants, all falling within the scope of protection as defined by the following claims.

## Claims

1. An apparatus (100) for constructing a coil (B), comprising:
- A supply unit (2) for supplying at least one web (N1), suitable for constructing a web-like article (N) for said coil (B), along a predefined advancement path (PA),
- At least one compensator (1a) for said at least one web (N1) positioned downstream of said supply unit (2), configured to contain a quantity of said at least one web (N1) which is variable in terms of length along said advancement path (PA), and comprising a fixed outlet section (4) for said at least one web (N1),
- A movable portion (50) positioned downstream of said at least one compensator (1a), configured to move reversibly in a movement direction (d) between a first distal position with respect to said supply unit (2) and a second proximal position with respect to said supply unit (2), said movable portion (50) comprising an inlet section (4') for said at least one web (N1),
- a winding unit (9), housed on said movable portion (50), comprising at least one winding head (10) configured to wind said at least one web (N1) in order to construct said coil (B),
wherein there are not present between said fixed outlet section (4) of said at least one compensator (1a) and said inlet section (4') of said movable portion (50) any adjustment systems for said at least one web (N1) or there are present only deflection systems for said at least one web (N1).

2. Apparatus (100) according to the preceding claim, wherein said movable portion (50) comprises said inlet section (4') for said at least one web (N1) and said at least one compensator (1a) is placed immediately upstream of said movable portion (50) so that between said fixed outlet section (4) of said at least one compensator (1a) and said inlet section (4') of said movable portion (50) there is a minimum distance (Dm) of less than 500 mm when said movable portion (50) is in said second proximal position.

3. An apparatus (100) according to the preceding claim, wherein for any position of said movable portion (50) along said movement direction (d) the spacing (D) between said fixed outlet section (4) of said at least one compensator (1a) and the inlet section (4') of the movable portion (50) is comprised between 50 mm and 2000 mm.

4. An apparatus (100) according to any one of the preceding claims, wherein said at least one web (N1) corresponds to four webs, of which two are separating webs (N1, N3) and two are conducting webs (N2, N4), and each of said four webs (N1, N2, N3, N4) is compensated for by a respective compensator (1a, 1b, 1c, 1d).

5. An apparatus (100) according to any one of the preceding claims, wherein said at least one compensator (1a) comprises a plurality of movable rollers (3) which are configured to move with respect to each other so as to contain said quantity of said at least one web (N1) which is variable in terms of length along said advancement direction (PA), and said fixed outlet section (4) of said at least one compensator (1a) comprises a first fixed redirecting outlet roller (5).

6. An apparatus according to any one of the preceding claims, wherein said at least one compensator (1a) extends in a main direction which is substantially horizontal.

7. An apparatus (100) for constructing a coil (B), comprising:
- A supply unit (2) for supplying at least one web (N1), suitable for constructing a web-like article (N) for said coil (B), along a predefined advancement path (PA);
- A least one compensator (1a) for said at least one web (N1) positioned downstream of said supply unit (2), said compensator being configured to contain a quantity of said at least one web (N1) which is variable in terms of length along said advancement path (PA) and comprising a fixed outlet section (4) for said at least one web (N1),
- A movable portion (50), positioned downstream of said at least one compensator (1a), configured to move reversibly along a movement direction (d) between a first distal position with respect to said supply unit (2) and a second proximal position with respect to said supply unit (2),
- A winding unit (9), housed on said movable portion (50), comprising at least one winding head (10), configured to wind said at least one web (N1) in order to construct said coil (B), and comprising an inlet section (4') for said at least one web (N1),
wherein said fixed outlet section (4) of said at least one compensator (1a) is positioned near said inlet section (4') of said movable portion (50).

8. An apparatus according to the preceding claim, wherein between said fixed outlet section (4) of said at least one compensator (1a) and said inlet section (4') of said movable portion (50) there is a minimum spacing (Dm) smaller than 500 mm when said movable portion (50) is in said second proximal position.

9. An apparatus according to the preceding claim, wherein for any position of said movable portion (50) along said movement direction (d) the spacing (D) between said fixed outlet section (4) of said at least one compensator (1a) and said inlet section (4') of said movable portion (50) is comprised between 50 mm and 2000 mm.

10. A method for constructing a coil comprising
- Supplying by means of a supply unit (2) at least one web (N1) along a predefined advancement path (PA) at a first linear velocity (V1),
- Providing a compensator (1a) for said at least one web (N1) along said predefined advancement path (PA),
- Providing, downstream of said compensator (1a), a movable portion (50), configured to move along a movement direction (d) between a first distal position with respect to said supply unit (2), in which a maximum length (LM) of said at least one web (N1) is interposed between said movable portion (50) and said compensator (1a), and a second proximal position with respect to said supply unit (2), in which a minimum length (Lm) of said at least one web (N1) is interposed between said movable portion (50) and said compensator (1a),
- Providing a winding unit (9), housed on said movable portion (50), comprising at least one winding head (10) configured to wind said at least one web (N1) in order to construct said coil (B),
- At least partially winding said at least one web (N1) by means of said winding head (10) at a first linear winding velocity (VA1) greater than said first linear velocity (V1) while said movable portion (50) is moving, thereby bringing about a first linear velocity difference (ΔV1) between said first linear winding velocity (VA1) and said first linear velocity (V1),
- compensating for a quantity of said at least one web (N1) required by said winding head (10) as a function of said first linear velocity difference (ΔV1) by moving said movable portion (50) from said distal position towards said proximal position and activating said compensator (1a).

11. A method according to claim 10, wherein said compensation is carried out by moving said movable portion (50) between 99% and 1% of the difference between said maximum length (LM) and said minimum length (Lm) of said at least one web (N1) and the remaining compensation necessary is carried out by means of said compensator (1a).
